# NEUE EUROPÄISCHE PATENTSCHRIFT

(11) **EP 0 633 400 B2**
(45) Veröffentlichungstag und Bekanntmachung des Hinweises auf die Entscheidung über den Einspruch: **29.03.2000**
(45) Hinweis auf die Patenterteilung: 20.11.1996
(21) Anmeldenummer: 94107744.8
(22) Anmeldetag: 19.05.1994
(51) Int. Cl.: F16L 55/05

(54) **Adaptiver hydropneumatischer Pulsationsdämpfer**
Adaptiv hydropneumatic pulsation damper
Amortisseur de pulsations hydropneumatique adaptif

(30) Priorität: 04.06.1993 DE 4318553
(43) Veröffentlichungstag der Anmeldung: 11.01.1995
(73) Patentinhaber: DaimlerChrysler AG, 70567 Stuttgart (DE)
(72) Erfinder: Backé, Wolfgang, Prof., D-52074 Aachen (DE); Esser, Joachim, Dipl.-Ing., D-52072 Aachen (DE); Bublitz, Heiko, Dipl.-Ing., D-70372 Stuttgart (DE); Kooths, Uwe, Dipl.-Ing., D-70327 Stuttgart (DE); Trecker, Oliver, Dipl.-Ing., D-52074 Aachen (DE)

(56) Entgegenhaltungen:
- DE-A- 2 505 856
- DE-A- 2 905 887
- US-A- 2 773 455
- US-A- 4 088 154
- US-A- 4 163 461
- M.KIPPING: 'Konzeption und Entwicklung eines Softwarepaketes zur linearen und nichtlinearen Simulation eines Ölhydraulikprüfstandes zur aktiven Pulsationsminderung', Seiten 18-21,26,27,44-50,60,69,75,77-79 und 161, Diplomarbeit der TH-Darmstadt, FG HMA 1992
- Fortschritt-Berichte VDI, Fachtagung 'Integrierte mechanisch-elektronische Systeme', 2. und 3. März 1993, Seiten 95-106

## Beschreibung

Die Erfindung betrifft einen passiven adaptiven hydropneumatischen Pulsationsdämpfer, welcher für pulsationsbehaftete Hydrauliksysteme mit wechselndem Betriebsdruck, insbesondere Hydrauliksysteme mit pulsierend arbeitender Pumpe, geeignet ist, mit den Pulsationen des Hydraulikmediums ausgesetztem Gas- bzw. Dampfmedium, welches in einer an das Hydrauliksystem angekoppelten dampf- bzw. gasführenden Kammer eingeschlossen ist und ein an den hydraulischen Druck adaptierbares, volumenelastisches Polster bildet.

Bei einem aus der DE 25 05 856 B2 bekannten Dämpfer der eingangs angegebenen Art ist eine vom Hydraulikmedium durchströmte Schlauchmembran vorgesehen, welche fluidisch mit einer weiteren Membran gekoppelt ist, die einen Teil der Wandung einer Luftkammer bildet. Bei Bewegungen der Schlauchmembran führt also die weitere Membran analoge Bewegungen aus, wobei sich das Volumen der Luftkammer je nach Bewegungsrichtung der weiteren Membran vergrößert bzw. verkleinert Die weitere Membran ist mechanisch mit einem Steuerventil gekoppelt, über das die Luftkammer mit einer Druckluftquelle bzw. mit einem Auslaß verbindbar ist. Wird die weitere Membran in der das Volumen der Luftkammer verkleinernden Richtung hinreichend weit bewegt, so wird die Luftkammer zur zusätzlichen Einführung von Luft mit der Druckluftquelle verbunden. Bewegt sich dagegen die weitere Membran hinreichend weit in entgegengesetzter Richtung, so wird Luft aus der Luftkammer abgeführt. Auf diese Weise läßt sich erreichen, daß der Luftdruck in der Luftkammer und der hydraulische Druck weitestgehend gleiche Werte haben, wenn sich die Schlauchmembran und insbesondere die weitere Membran in einer Mittel- oder Normallage befinden.

Bei einer weiteren in der DE 25 05 856 B2 beschriebenen Ausführungsform ist die Schlauchmembran fluidisch mit zwei weiteren Membranen gekoppelt, die beide auf ihrer von der Schlauchmembran abgewandten Seite vom Druck in der Luftkammer beaufschlagt werden. Jedoch bildet nur eine der weiteren Membranen einen Teil der Wandung dieser Luftkammer, während der Raum auf der von der Schlauchmembran abgewandten Seite der anderen weiteren Membran über eine längere Druckleitung mit der Luftkammer verbunden ist und über ein von dieser anderen weiteren Membran gesteuertes Schaltventil mit einer Druckluftquelle bzw. mit einem Auslaß verbunden werden kann. Im Ergebnis wird also die gleiche Funktion wie bei der erstbeschriebenen Ausführungsform erreicht, d.h. durch Zu- bzw. Abfuhr von Luft wird deren Volumen in der Luftkammer auch bei wechselnden hydraulischen Drücken etwa konstant gehalten.

Nachteilig ist, daß die zur Dämpfung der Pulsationen benötigten Membranen auch die Stellkräfte für das Schaltventil erzeugen müssen und somit in ihrer Beweglichkeit behindert werden Dadurch wird die erzielbare Dämpferwirkung herabgesetzt. Im übrigen ist ein derartiges System prinzipiell nicht rückkopplungsfrei, d. h. es können vergleichsweise leicht Resonanzen angeregt werden, wobei dann die mit dem Schaltventil gekoppelte Membran den Druck in der Luftkammer unter Verstärkung der Resonanzschwingungen verändert

Ein aus der DE 33 17 442 A1 bekannter weiterer Dämpfer der eingangs angegebenen Art ist für Hydrauliksysteme vorgesehen, welche Flüssigkeiten mit einer einen hohen Dampfdruck aufweisenden Komponente, beispielsweise eine mit Ammoniak angereicherte wäßrige Lösung, führen. Der sich in einem Sammelraum für diese Flüssigkeit bildende Dampf wird über eine Dampfleitung zu einem dampfgefüllten Raum geführt, dessen Wandung bereichsweise durch eine Membran gebildet wird, deren von dieser Kammer abgewandte Seite von der Flüssigkeit beaufschlagt wird. Die Verbindung zwischen der dampfgefüllten Kammer und der Dampfzone des Sammelraumes der Flüssigkeit erfolgt über passiv gesteuerte Ventile, derart, daß die Membran bei Hubbewegungen nach Art eines Verdrängerorgans zu arbeiten vermag und im dampfgefüllten Raum ein gewisser - begrenzter - Überdruck gegenüber der Dampfzone des Sammelraumes der Flüssigkeit eingestellt wird.

Abgesehen davon, daß diese bekannte Anordnung nur für Flüssigkeiten geeignet ist, die eine zum Ausdampfen neigende Komponente mit hohem Dampfdruck enthalten, ist der bauliche Aufwand recht hoch Darüber hinaus können auch hier unter ungünstigen Umständen unerwünschte Rückkopplungseffekte auftreten.

In der DE 29 10 025 A1 wird ein hydropneumatischer Pulsationsdämpfer dargestellt, bei dem eine dampf- bzw. gasgefüllte Kammer nach außen abgesperrt ist und die Menge des eingeschlossenen Dampfes bzw. Gases nicht - bzw nicht kurzfristig - veränderbar ist. Bei längerfristigen größeren Druckänderungen im hydraulischen System wird deshalb eine die dampf- bzw. gasgefüllte Kammer abschließende, auf einer Seite vom hydraulischen Medium beaufschlagte Membran von der jeweils wirksamen Druckdifferenz zwischen dem Hydraulikmedium und dem Dampf bzw. Gas in einer ihrer Endlagen gehalten. Die von der Druckdifferenz stark belasteten Teile der Membran besitzen eine extreme Dicke, durch welche die Flexibilität dieser Membranbereiche stark eingeschränkt wird. Abgesehen davon, daß dieser Dämpfer bei größeren Druckdifferenzen gar nicht dämpfungswirksam zu arbeiten vermag, weil dann die Membran dauernd in einer Endlage verbleibt, ist die Dämpferwirkung auch bei Annäherung des Dampf- bzw. Gasdruckes und des Hydraulikdruckes aneinander aufgrund der mangelnden Flexibilität der Membran beschränkt.

Aus der DE 29 05 887 A1 schließlich ist ein Druckspeicher bzw. ein Membran-Ausdehnungsgefäß bekannt, welches im wesentlichen aus einer Druckgaskammer besteht, in der ein Balg angeordnet ist, dessen Innenraum zur Aufnahme von Hydraulikmedium aus einem mit ihm kommunizierenden Hydrauliksystem dient. Bei zunehmendem Hydraulikdruck vergrößert sich das Volumen des genannten Balges, welcher dementsprechend größere Mengen des Hydraulikmediums aufnimmt und das Gas in der Druckgaskammer entsprechend komprimiert.

Neben den vorangehend beschriebenen passiven Pulsationsdämpfern sind aktive Dämpfungssysteme bekannt, bei denen ein aktiv, beispielsweise elektrisch, angetriebener bzw. erregter Aktuator seinerseits Schwingungen bzw. Pulsationen erzeugt, die zu den zu dämpfenden Pulsationen phasenverschoben sind, derart, daß eine Auslöschung durch Interferenz auftritt. Hierzu kann auf die Druckschrift Fortschritt - Berichte VDJ, Reihe 12, Nr. 179, S. 95 ff. verwiesen werden (=JSBN 3-18-14 7912-8).

Aufgabe der Erfindung ist es nun, bei einem Pulsationsdämpfer der eingangs angegebenen Art ein gutes Betriebsverhalten bei unterschiedlichen hydraulischen Betriebsdrücken zu gewährleisten. Insbesondere sollen einerseits Pulsationen wirksam gedämpft und andererseits schnelle Änderungen des hydraulischen Arbeits- bzw. Betriebsdruckes ermöglicht werden.

Diese Aufgabe wird erfindungsgemäß dadurch gelöst, daß das vom Gas- bzw. Dampfmedium gebildete volumenelastische Polster über einen relativ ungedrosselten Weg, welcher nur die Verschiebung einer geringen Menge des Hydraulikmediums zuläßt, sowie über einen gedrosselten Weg, welcher die Verschiebung großer Mengen des Hydraulikmediums zuläßt, vom Druck des Hydrauliksystems beaufschlagt wird.

Die Erfindung beruht auf dem allgemeinen Gedanken, das volumenelastische Gas- bzw. Dampfpolster mit dem Hydrauliksystem über zwei unterschiedliche Wege zu koppeln, die sich hinsichtlich ihrer Drosselwirkung extrem unterscheiden und beide so ausgebildet sind, daß sie zumindest kurzfristig nur die Verschiebung von geringen Mengen des Hydraulikmediums gestatten. Dadurch ist gewährleistet, daß der Pulsationsdämpfer kurzfristig nur geringe Mengen des hydraulischen Mediums aus dem Hydrauliksystem aufnehmen kann, d.h. ein geringes "Schluckvermögen" hat. Dies hat die erwünschte Folge, daß schnelle Änderungen des Betriebsdruckes des Hydrauliksystems durch Zu- bzw.

Abfuhr geringer Mengen hydraulischen Mediums zu bzw. von einem Verbraucher ohne Beeinträchtigung durch den Pulsationsdämpfer möglich sind. Hydraulische Druckquelle und hydraulischer Verbraucher können also ohne weiteres "hart" miteinander hydraulisch gekoppelt werden.

Trotz dieser durch die Erfindung ermöglichten harten hydraulischen Kopplung kann das volumenelastische Gas- bzw. Dampfpolster des erfindungsgemäßen Pulsationsdämpfers durch entsprechende Bemessung seines Volumens eine große Weichheit, d.h. eine geringe Federrate, aufweisen, wie es im Hinblick auf eine wirksame Pulsationsdämpfung wünschenswert ist. Durch den gedrosselten Weg, welcher zwar nur eine geringe Strömungsgeschwindigkett und dementsprechend nur eine geringe Stromstärke des hydraulischen Flusses zuläßt, jedoch prinzipiell die Verschiebung beliebig großer Mengen des hydraulischen Mediums ermöglicht, kann längerfristig immer eine hinreichende Verschiebung von Hydraulikmedium sichergestellt werden, um dem Gas- bzw. Dampfpolster eine Änderung des Volumens zur Anpassung an den mittleren Betriebsdruck im Hydrauliksystem zu ermöglichen. Damit kann der relativ ungedrosselte Weg eine gute schwingungsmäßige Kopplung zwischen dem Gas- bzw. Dampfpolster und dem Hydrauliksystem herstellen, und zwar ohne daß es notwendig wäre, über diesen ungedrosselten Weg bei Änderungen des hydraulischen Arbeits- bzw. Betriebsdruckes größere Mengen hydraulischen Mediums zu verschieben.

Funktional dient also der gedrosselte Weg zur Adaption des Gas- bzw. Dampfpolsters an den hydraulischen Arbeits- bzw. Betriebsdruck, während der ungedrosselte Weg ausschließlich zur schwingungsmäßigen Kopplung zwischen Gas- bzw. Dampfpolster und Hydrauliksystem vorgesehen ist.

Gemäß einer bevorzugten Ausführungsform der Erfindung ist vorgesehen, daß im relativ ungedrosselten Weg eine die Menge des ungedrosselt verschiebbaren Hydraulikmediums begrenzende Membran nach Art einer Absperrung zwischen die Beweglichkeit der Membran begrenzenden Anschlagflächen angeordnet ist. Der Bewegungsraum dieser Membran braucht nur geringfügig größer bemessen zu sein als die durch die Druckpulsationen verursachten Bewegungsamplituden der Membran.

Die genannte Membran kann auf einer Seite vom Gas- bzw. Dampfmedium beaufschlagt sein und dementsprechend gleichzeitig eine Sperre zwischen dem Hydraulikmedium und dem Gas- bzw. Dampfmedium bilden.

Jedoch ist es auch vorteilhaft, diese Membran so anzuordnen, daß sie beidseitig von Hydraulikmedium beaufschlagt ist und zwei über den gedrosselten Weg kommunizierende Hydraulikbereiche voneinander trennt, wobei der eine Hydraulikbereich in der gas- bzw. dampfführenden Kammer angeordnet ist bzw. damit relativ drosselfrei kommuniziert und der andere Hydrauikbereich im Hydrauliksystem angeordnet ist bzw. damit relativ drosselfrei kommuniziert.

Bei dieser letzteren Ausführung kann der gedrosselte Weg in besonders zweckmäßiger Ausgestaltung der Erfindung als Drosselöffnung in der genannten Membran ausgebildet sein, so daß der relativ ungedrosselte, jedoch nur die Verschiebung geringer Mengen des Hydraulikmediums zulassende Weg sowie der relativ gedrosselte, jedoch für prinzipiell beliebige Mengen des Hydraulikmediums offene Weg konstruktiv miteinander vereinigt sind.

Die die ungedrosselt verschiebbare Menge des Hydraulikmediums begrenzende Membran ist bevorzugt in einer Membranarbeitskammer angeordnet, deren dem Hydrauliksystem zugewandte Seite in Reihe zwischen einer hydraulischen Druckquelle, z.B. einer Pumpe, und einem Verbraucher angeordnet ist, wobei sowohl die Druckquelle als auch der Verbraucher eine Pulsationsquelle darstellen können. Hier ist also die genannte Membran an einem vom Hydraulikmedium ständig durchströmten Raum angeordnet, so daß die Pulsationen gut auf die Membran übertragen werden. Dies gilt insbesondere dann, wenn die Ein- bzw. Auslässe für das Hydraulikmedium an dem genannten Raum etwa senkrecht zur Membranebene angeordnet sind und sich die Strömungsrichtung des Hydraulikmediums zwischen Ein- und Auslaß umkehren muß.

Im übrigen wird hinsichtlich bevorzugter Merkmale der Erfindung auf die Ansprüche sowie die nachfolgende Erläuterung der Zeichnung verwiesen, anhand der bevorzugte Ausführungsformen der Erfindung dargestellt werden.

Dabei zeigt
- Fig. 1: ein schaltplanartig dargestelltes Hydrauliksystem mit erfindungsgemäßem Pulsationsdämpfer,
- Fig. 2: ein Schnittbild des Pulsationsdämpfers im Bereich einer die Menge des drosselfrei verschiebbaren Hydraulikmediums begrenzenden Membran,
- Fig. 3: eine der Fig. 1 entsprechende Darstellung einer abgewandelten Ausführungsform und
- Fig. 4: eine weitere abgewandelte Ausführungsform.

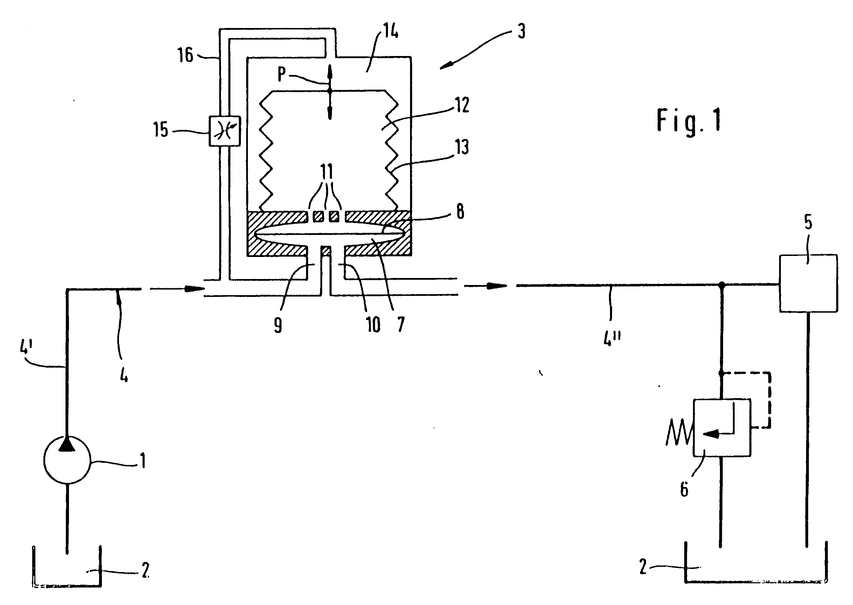

Gemäß Fig. 1 ist eine pulsierend arbeitende Pumpe 1, beispielsweise eine Flügelzellenpumpe, saugseitig mit einem Reservoir 2 und druckseitig über eine durch einen Pulsationsdämpfer 3 führende Druckleitung 4 mit einem Verbraucher 5 verbunden, von dem aus das zugeführte Hydraulikmedium zum Reservoir 2 zurückströmen kann. Zur Begrenzung des Maximaldruckes kann ein Druckbegrenzungsventil 6 vorhanden sein.

Je nach Betriebszustand des Verbrauchers 5 können in der Druckleitung 4 deutlich unterschiedliche hydraulische Arbeits- bzw. Betriebsdrücke vorliegen.

Der Pulsationsdämpfer 3 besitzt eine Membranarbeitskammer 7, welche eine im wesentlichen linsenartige Form aufweist und durch eine in der Äquatorebene dieser Kammer 7 angeordnete tellerförmige Membran 8 in zwei Teilräume unterteilt ist.

Der untere Teilraum der Membranarbeitskammer 7 bildet die Hydraulikseite der Tellermembran 8 und ist mit dem pumpenseitigen Teil 4' der Druckleitung 4 über einen Eingangskanal 9 und mit dem verbraucherseitigen Teil 4'' der Druckleitung 4 über einen Ausgangskanal 10 verbunden. Diese Kanäle sind nahe der Zentralachse der Membranarbeitskammer 7 an dieselbe angeschlossen und im wesentlichen senkrecht zur Tellermembran 8 ausgerichtet.

Der obere Teilraum der Membranarbeitskammer 7 bildet die Gasseite der Tellermembran 8 und ist über zur Tellermembran 8 etwa senkrechte, nahe der Zentralachse der Membranarbeitskammer 7 angeordnete Kanäle 11 mit einem Gasraum 12 verbunden, welcher von einer balgartigen Druckausgleichmembran 13 umschlossen wird. Über eine in Fig. 1 nicht dargestellte Fülleitung ist gegebenenfalls eine Zu- bzw. Abfuhr von Pneumatikmedium in den bzw. aus dem Gasraum 12 möglich.

Die Druckausgleichmembran 13 ist innerhalb einer Kammer 14 angeordnet, welche über eine mit vorzugweise einstellbarer Drossel 15 versehene Hydraulikleitung 16 mit der Druckleitung 4, im dargestellten Beispiel mit dem Leitungsteil 4', verbunden ist.

Während die Tellermembran 8 unter einer gewissen elastischen Spannung steht bzw. bei Auslenkung aus ihrer in Fig. 1 dargestellten Mittellage elastisch in die Mittellage zurückzukehren sucht, besitzt die balgartige Druckausgleichmembran 13 bei allen Betriebszuständen eine im Vergleich zur Tellermembran 8 vernachlässigbare Rückstelltendenz, d.h. die Membran 13 besitzt eine vernachlässigbare Federrate.

Die dargestellte Anordnung arbeitet wie folgt:

Normalerweise nimmt die Tellermembran 8 eine Lage nahe der dargestellten Mittellage ein, da sich über die Leitung 16 Druckgleichheit im hydraulischen Medium der Druckleitung 4 einerseits und im hydraulischen Medium der Kammer 14 andererseits einzustellen vermag. Damit reichen die elastischen Kräfte der Tellermembran 8 aus, sich in die Mittellage einzustellen.

Soweit nun in der Druckleitung 4 hydraulische Pulsationen auftreten, werden diese von der Drossel 15 in der Leitung 16 an einer Fortpflanzung in Richtung der Kammer 14 gehindert. Die Pulsationen können sich lediglich auf die Tellermembran 8 auswirken, weil deren Hydraulikseite ungedrosselt mit der Druckleitung 4 kommuniziert. Dementsprechend schwingt die Tellermembran 8 mit der Pulsationsfrequenz, wobei die Pulsationen aufgrund der Volumenelastizität des eingeschlossenen Gases 12 gedämpft werden.

Bei langsamen Druckänderungen in der Druckleitung 4 bewegt sich die Druckausgleichmembran 13 entsprechend dem Doppelpfeil P in Fig. 1 nach oben oder unten und paßt sich dementsprechend der Kompression des eingeschlossenen Gases 12 bei Drucksteigerung bzw. der Expansion des eingeschlossenen Gases 12 bei Druckminderung an. Da die Druckausgleichmembran 13 leicht beweglich ausgebildet ist, führen langsamere Druckänderungen im Hydrauliksystem, welche durch die Drossel 15 praktisch verzögerungsfrei in die Kammer 14 übertragen werden, zu keinerlei nennenswerten Bewegungen der Tellermembran 8.

Bei schnellen Änderungen des hydraulischen Druckes in der Leitung 4 wird aufgrund der Drossel 15 vorübergehend eine Druckdifferenz zwischen dem Hydraulikdruck in der Kammer 14 und dem Hydraulikdruck in der Leitung 4 sowie auf der Hydraulikseite der Tellermembran 8 in der Membranarbeitskammer 7 auftreten, bis über die Drossel 15 hinreichend Hydraulikmedium für einen Druckausgleich zwischen der Kammer 14 und der Druckleitung 4 verschoben worden ist. Soweit in diesem Falle größere Druckdifferenzen zwischen dem Hydraulikdruck auf der Hydraulikseite der Tellermembran 8 und dem Hydraulikdruck in der Kammer 14 und damit dem pneumatischen Druck des Gases 12 auftreten, wird die Tellermembran 8 maximal ausgelenkt, d.h. auf die obere oder untere Innenwandung der Membranarbeitskammer 7 aufgelegt. Die genannten Wandungen wirken dann vorübergehend als obere bzw. untere Anschlag- und Stützfläche für die Tellermembran 8. Bei kurzzeitig starkem Anstieg des Hydraulikdruckes in der Leitung 4 können also weder von der Leitung 16 noch von der Membranarbeitskammer 7 größere Mengen des Hydraulikmediums aus der Leitung 4 aufgenommen werden. Dies ist gleichbedeutend damit, daß bei Bedarf der den Verbraucher 5 beaufschlagende hydraulische Druck schnell durch Zu- bzw. Abfuhr geringer Hydraulikmengen in die bzw. aus der Leitung 4 verändert werden kann. Es wird also eine steife Kopplung zwischen Druckquelle und Verbraucher erreicht.

Obwohl also der erfindungsgemäße Pulsationsdämpfer gegenüber den Druckpulsationen, die prinzipiell mit hohen dynamischen Druckschwankungen verbunden sind, gut dämpfungswirksam und damit nachgiebig ist, bleibt der erfindungsgemäße Pulsationsdämpfer gegenüber gegebenenfalls gewünschten stoßweisen Änderungen des hydraulischen Arbeits- bzw. Betriebsdruckes weitestgehend unnachgiebig bzw. hart.

Die Dämpfungswirkung wird dadurch begünstigt, daß Eingangs- und Ausgangskanal 9 und 10 senkrecht zur Tellermembran 8 angeordnet sind und dementsprechend in der Hydraulikseite der Membranarbeitskammer 7 zwischen Eingangs- und Ausgangkanal 9 und 10 eine Umkehr der Strömungsrichtung des hydraulischen Mediums stattfindet, wobei die mit den Pulsationen verbundenen Druckwellen unter starker Abschwächung bzw. Auslöschung von der durch das Gas 12 nachgiebig abgestützten Tellermembran 8 reflektiert werden.

Durch Justage der Drossel 15 kann die Nachgiebigkeit des dargestellten Pulsationsdämpfers bei schnellen Änderungen des hydraulischen Betriebsdruckes in der Leitung 4 eingestellt werden. Je größer der Drosselwiderstand ist, um so steifer wird die hydraulische Kopplung zwischen Pumpe 1 und Verbraucher 5. Allerdings muß dann bei schnellen Änderungen des hydraulischen Betriebsdruckes in der Leitung 4 in Kauf genommen werden, daß die Tellermembran 8 vorübergehend eine Endlage erreicht und damit bewegungsunfähig wird, weil über die Drossel 15 noch kein ausreichender Druckausgleich zwischen der Kammer 14 und der Druckleitung 4 stattgefunden hat. Damit können Pulsationen vorübergehend nicht gedämpft werden. Je geringer der Drosselwiderstand der Drossel 15 ist, um so schneller kann ein Druckausgleich zwischen der Kammer 14 und der Druckleitung 4 stattfinden. Allerdings muß dann eine zunehmende Weichheit der hydraulischen Kopplung zwischen Pumpe 1 bzw. Druckquelle und Verbraucher 5 in Kauf genommen werden. Andererseits bleibt dann eine Pulsationsdämpfung auch bei relativ schnell wechselnden hydraulischen Betriebsdrücken möglich.

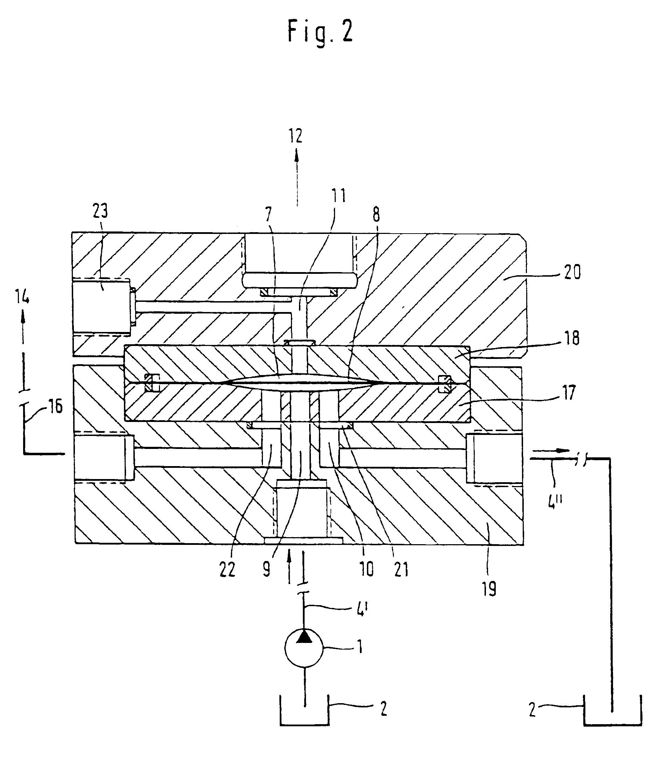

Die Fig. 2 zeigt eine konstruktivere Darstellung der Membranarbeitskammer 7 sowie anschließender Teile.

Die Membranarbeitskammer 7 ist zwischen zwei aufeinanderliegenden Platten 17 und 18 ausgebildet, die ihrerseits zwischen plattenförmigen Teilen 19 und 20 eingespannt sind. Grundsätzlich ist es jedoch auch möglich und vorteilhaft, die Teile 17 und 19 einerseits sowie die Teile 18 und 20 andererseits jeweils als gemeinsames einstückiges Teil auszubilden.

Die Platte 17 sowie das plattenförmige Teil 19 besitzen jeweils eine zur Zentralachse der Tellermembran 8 koaxiale Bohrung, durch die der Eingangskanal 9 bzw. ein Anschluß für den Leitungsteil 4' der Druckleitung gebildet werden.

Konzentrisch zu dieser Zentralbohrung ist auf der der Platte 17 zugewandten Seite des plattenförmigen Teiles 19 eine Ringnut 21 angeordnet, welche mit Bohrungen kommuniziert, die im plattenförmigen Teil 19 sowie in der Platte 17 parallel zu den den Eingangskanal 9 bildenden Bohrungen angeordnet sind. Diese von der Ringnut 24 ausgehenden Bohrungen bilden einerseits den Ausgangskanal 10, welcher über eine entsprechende Anschlußbohrung mit dem Leitungsteil 4'' der Druckleitung 4 verbunden ist. Andererseits wird durch zumindest eine dieser Bohrungen ein Kanal 22 gebildet, welcher über eine entsprechende Anschlußbohrung mit der Hydraulikleitung 16 verbunden ist, die zur Kammer 14 führt (vgl. auch Fig. 1).

In der Platte 18 sowie im plattenförmigen Teil 20 sind zur Zentralachse der Membran 8 konzentrische Bohrungen angeordnet, die den Kanal 11 bilden, über den der oberhalb der Membran 8 verbleibende Teil der Membranarbeitskammer 7 mit dem Gasraum 12 (vgl. Fig. 1) kommuniziert.

Vom Kanal 11 zweigt ein Anschluß 23 ab, über den die Menge des pneumatischen Mediums im Gasraum 12 verändert bzw. der Gasraum 12 befüllt werden kann.

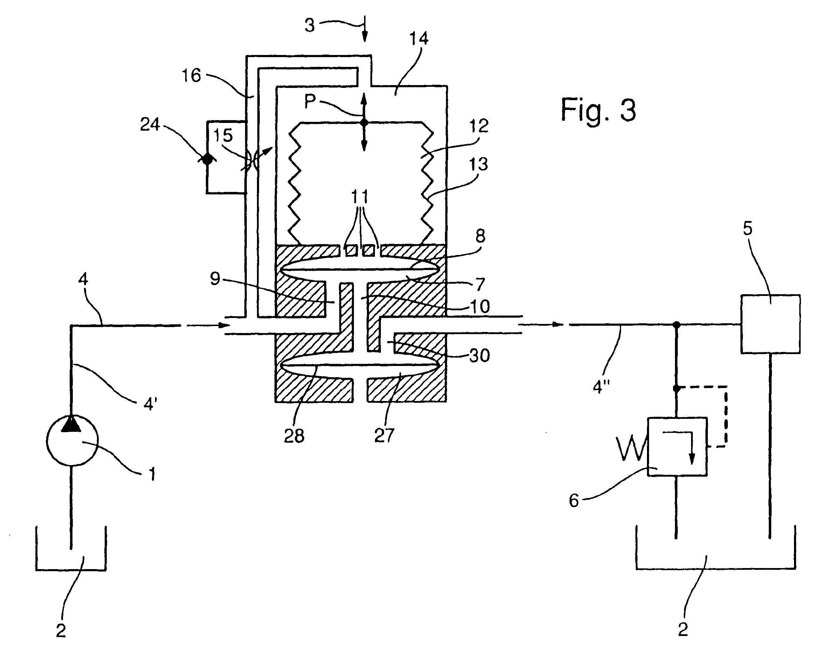

Die Ausführungsform der Fig. 3 unterscheidet sich von der in Fig. 1 dargestellten Ausführungsform zunächst dadurch, daß parallel zur Drossel 15 ein Rückschlagventil 24 angeordnet ist, welches in Richtung der Druckleitung 4 öffnet, wenn dort gegenüber dem Druck in der Kammer 14 ein schneller Druckabfall auftritt. Auf diese Weise kann sich ein eventueller Druckabfall in der Leitung 4 schnell auf die Kammer 14 fortpflanzen. Dadurch wird vermieden, daß sich die Membran 8 bei Druckabfall in der Leitung 4 vorübergehend an die in Fig. 3 untere Wand der Membranarbeitskammer 7 anlegen und dämpfungsunwirksam werden kann.

Im übrigen bildet in der Fig. 3 der Ausgangskanal 10 der Membranarbeitskammer 7 einen Eingangskanal einer weiteren, ähnlichen Membranarbeitskammer 27 mit der tellerförmigen Membran 28, welche auf ihrer vom Hydrauliksystem abgewandten Seite vom Druck der Atmosphäre beaufschlagt wird. Der Ausgang 30 der Membranarbeitskammer 27 ist dann mit dem Leitungsteil 4'' der Druckleitung 4 verbunden. Die weitere Membran 28 hat folgende Funktion:

Bei höheren hydraulischen Betriebsdrücken muß der Gasraum 12 einen Gasvorspannungsdruck haben, wenn gewährleistet sein soll, daß der Gasraum 12 bei höheren Betriebsdrücken im Hydrauliksystem ein hinreichendes Volumen hat. Dies ist aber gleichbedeutend damit, daß die Membran 8 ständig in ihrer unteren Endlage auf der unteren Wand der Membranarbeitskammer 7 aufliegt, wenn der hydraulische Druck in der Leitung 4 unter den Gasvorspannungsdruck abfällt. Bei derart geringen hydraulischen Drücken kann dann das pneumatische Medium im Gasraum 12 nicht mehr dämpfungswirksam werden. Die Membran 28 ist nun so bemessen, daß sie bei derart geringen Drücken eine mittlere Lage in der Membranarbeitskammer 27 einnimmt und damit gegen den Atmosphärendruck bei auftretenden Pulsationen dämpfungswirksam nachgeben kann. Sobald dann der hydraulische Betriebsdruck ansteigt, legt sich die Membran 28 auf die untere Wand der Membranarbeitskammer 27 auf und wird dämpfungsunwirksam.

Gegebenenfalls kann im Membranarbeitsraum 27 unterhalb der Membran 28 auch ein pneumatisches Medium oder ein Dampf mit geringem Druck eingesperrt sein. Am Funktionsprinzip ändert sich dadurch nichts Grundsätzliches. Bei Bewegungen der Membran 28 tritt dann lediglich eine mehr oder weniger ausgeprägte Druckänderung auf der Gasseite dieser Membran auf.

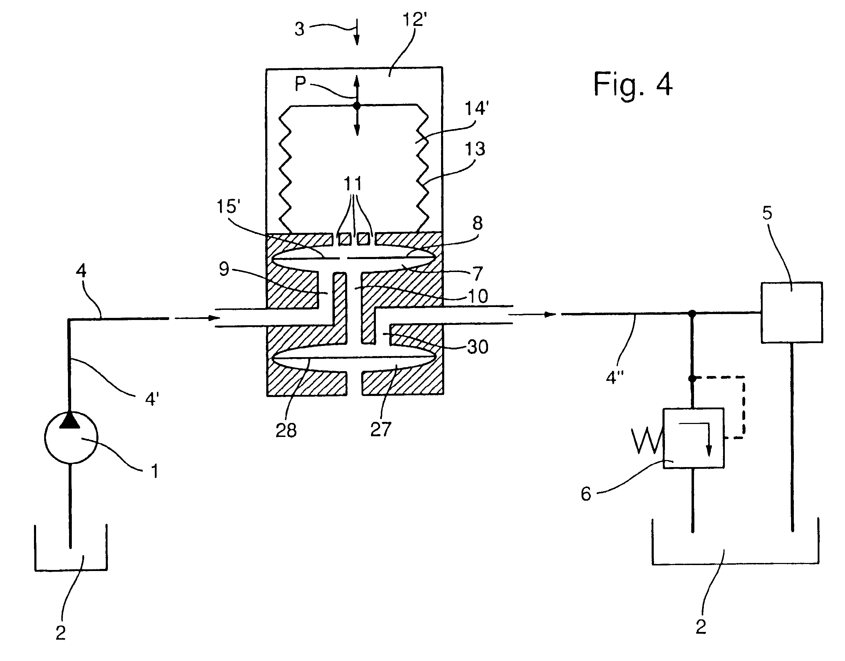

Die Ausführungsform der Fig. 4 unterscheidet sich von den Ausführungsformen nach den Fig. 1 und 3 im wesentlichen dadurch, daß die Leitung 16 entfällt und der Raum 14' zwischen der Membran 8 und der Membran 13 mit hydraulischem Medium ausgefüllt ist, wobei der Raum 14' über eine Drosselöffnung 15' in der Membran 8 mit der Druckleitung 4 kommuniziert; außerdem ist der Gasraum 12' hier außerhalb der Membran 13 im Pulsationsdämpfer 3 untergebracht.

Auf diese Weise wird bei starken Änderungen des hydraulischen Betriebsdruckes ein schneller Übertritt von hydraulischem Medium zwischen der Leitung 4 und Hydraulikkammer 14' vermieden, da in diesem Falle die Membran 8 vorübergehend gegen die obere oder untere Wand der Menbranarbeitskammer 7 in eine Endlage gedrängt wird, so daß nur noch wenig hydraulisches Medium von der Druckleitung 4 über die Membranarbeitskammer 7 abzuströmen vermag bzw. über die Membranarbeitskammer 7 zur Leitung 4 strömen kann. Damit ist bei schnellen Änderungen des hydraulischen Betriebsdruckes eine steife Kopplung zwischen der Pumpe 1 bzw. Druckquelle und dem Verbraucher 5 gewährleistet. Sobald ein Druckausgleich zwischen dem Hydraulikraum 14' und der Druckleitung 4 stattgefunden hat und die Membran 8 wieder eine von den Wandungen der Membranarbeitskammer 7 entfernte Lage einnimmt, können sich Druckpulsationen drosselfrei über die Membran 8 hinweg in den Hydraulikraum 14 fortpflanzen, da die Membran 8 nunmehr frei zu schwingen vermag. Dementsprechend wird der Gasraum 12' aufgrund seiner Volumenelastizität dämpfungswirksam.

Bei dieser letzteren Konstruktion ist es wichtig, daß die Kanäle 11 in grundsätzlich gleicher Weise wie die Eingangs- und Ausgangskanäle 9 und 10 gegenüber Druckpulsationen weitestgehend drosselfrei sind, d.h. eine geringe hydraulische Induktivität haben. Dadurch wird die Dämpfungswirkung des Gasraumes 12' verbessert.

Um in den Endlagen der Membran 8 eine gute Abstützung zu erreichen, insbesondere auch bei höheren, auf die Membran 8 einwirkenden Druckdifferenzen, kann es zweckmäßig sein, eine Vielzahl von Kanälen mit jeweils geringen Querschnitten, jedoch großen Gesamtquerschnitt, anzuordnen, um einerseits die Drosselfreiheit und andererseits eine gleichförmige Abstützung für die Membran 8 zu ermöglichen.

Abweichend von den dargestellten Ausführungsformen kann auch vorgesehen sein, die Leitung 16 in den Fig. 1 und 3 wegzulassen und die Kammer 14 mit einer gesonderten hydraulischen Druckquelle zu verbinden, wobei durch unmittelbare Steuerung der Druckquelle und/oder durch Drucksteuerventile zwischen der gesonderen Druckquelle und der Kammer 14 gewährleistet wird, daß der hydraulische Druck in der Kammer 14 dem Hydraulikdruck in der Druckleitung 4 entspricht, an der zu diesem Zweck eine Druckmeßanordnung angeordnet sein kann. Eine solche Anordnung kann insbesondere bei Zweikreis-Systemen zweckmäßig sein. Hier bildet dann der jeweils andere hydraulische Kreis die gesonderte Druckquelle für die Kammer 14 des einen hydraulischen Kreises.

Ein bevorzugtes Einsatzgebiet der Erfindung sind hydraulische Servosysteme in Kraftfahrzeugen, z.B. Servolenkungen, wo der Pulsationsdämpfer druckseitig der Servopumpe auch dann dämpfungswirksam arbeiten kann, wenn sich der mittlere Hydraulikdruck ändert. Solche Druckänderungen treten z.B. auf, wenn die Lenkung aus der Geradeausstellung zum Anschlag nach rechts oder links eingeschlagen wird. Im übrigen arbeitet die Pumpe 1 bei derartigen Servosystemen regelmäßig mit unterschiedlicher Fördergeschwindigkeit, weil die Pumpe 1 unmittelbar vom Fahrzeugmotor angetrieben wird, dessen Drehzahl wiederum von der Fahrgeschwindigkeit und der jeweiligen Übersetzung im Antriebstrang abhängig ist. Auch wenn die Pumpe mit einer Hydraulikstromregelung kombiniert ist, können dann gewisse Druckschwankungen auftreten.

## Patentansprüche

1. Passiver adaptiver hydropneumatischer Pulsationsdampfer, geeignet für pulsationsbehaftete Hydrauliksysteme mit wechselndem Betriebsdruck, insbesondere Hydrauliksysteme mit pulsierend arbeitender Pumpe, mit den Pulsationen des Hydraulikmediums ausgesetztem Gas- bzw. Dampfmedium` welches in einer an das Hydrauliksystem angekoppelten dampf- bzw. gasführenden Kammer eingeschlossen ist und ein an den hydraulischen Druck adaptierbares, volumenelastisches Polster bildet,
**dadurch gekennzeichnet**
daß das vom Gas- bzw. Dampfmedium gebildete Polster (12,12') über einen relativ ungedrosselten Weg (7,8,11), welcher nur die Verschiebung einer geringen Menge des Hydraulikmediums zuläßt, sowie über einen gedrosselten Weg (15,15'), welcher die Verschiebung großer Mengen des Hydraulikmediums zuläßt, vom Druck des Hydrauliksystems (4) beaufschlagt wird.

2. Pulsationsdämpfer nach Anspruch 1,
**dadurch gekennzeichnet,**
daß im relativ ungedrosselten Weg (7,8,11) eine die Menge des ungedrosselt verschiebbaren Hydraulikmediums begrenzende Membran (8) nach Art einer Absperrung zwischen die Beweglichkeit der Membran (8) begrenzenden Anschlagfläche angeordnet ist.

3. Pulsationsdämpfer nach Anspruch 2,
**dadurch gekennzeichnet,**
daß die Membran (8) auf einer Seite vom Gas- bzw. Dampfmedium beaufschlagt ist.

4. Pulsationsdämpfer nach Anspruch 2,
**dadurch gekennzeichnet,**
daß die Membran (8) beidseitig von Hydraulikmedium beaufschlagt ist und zwei über den gedrosselten Weg kommunizierende Hydraulikbereiche (4,14') voneinander trennt, wobei der eine Hydraulikbereich in der gas- bzw. dampfführenden Kammer (14) angeordnet ist bzw. damit relativ drosselfrei kommuniziert und der andere Hydrauklikbereich im Hydrauliksystem (4) angeordnet ist bzw. damit relativ drosselfrei kommuniziert.

5. Pulsationsdämpfer nach Anspruch 4,
**dadurch gekennzeichnet,**
daß der gedrosselte Weg als Drosselöffnung (15') in der Membran (8) ausgebildet ist.

6. Pulsationsdämpfer nach einem Ansprüche 1 bis 5,
**dadurch gekennzeichnet,**
daß parallel zum gedrosselten Weg ein Rückschlagventil (24) angeordnet ist, welches in Richtung des Hydrauliksystems (4) öffnet.

7. Pulsationsdämpfer nach einem der Ansprüche 2 bis 6,
**dadurch gekennzeichnet,**
daß die Membran (8) tellerförmig ausgebildet und in der Äquatorebene eines im wesentlichen linsenförmigen Membranarbeitsraumes (7) angeordnet ist, welcher auf einer Seite der Membran (8) eine obere Anschlagfläche und auf der anderen Seite der Membran (8) eine untere Anschlagfläche für die Membran (8) bildet.

8. Pulsationsdämpfer nach einem der Ansprüche 1 bis 7
**dadurch gekennzeichnet,**
daß die gas- bzw. dampfführende Kammer (14) durch ein das eingeschlossene Gas- bzw. Dampfmedium gegenüber dem Hydraulikmedium abtrennendes Trennorgan (13) mit großem Hubbereich und widerstandsarmer Beweglichkeit in eine zumindest über den gedrosselten Hydraulikweg (15,15') mit dem Hydrauliksystem (4) verbundenen Hydraulikbereich sowie einen Gas- bzw. Dampfbereich (12,12') unterteilt ist.

9. Pulsationsdämpfer nach Anspruch 8,
**dadurch gekennzeichnet,**
daß das Trennorgan (13) als Balg ausgebildet ist.

10. Pulsationsdämpfer nach Anspruch 8,
**dadurch gekennzeichnet,**
daß das Trennorgan (13) als Membran ausgebildet ist.

11. Pulsationsdämpfer nach Anspruch 8,
**dadurch gekennzeichnet,**
daß das Trennorgan (13) als Blase ausgebildet ist.

12. Pulsationsdämpfer nach Anspruch 8,
**dadurch gekennzeichnet,** daß das Trennorgan (13) als Kolben ausgebildet ist.

13. Pulsationsdämpfer nach einem der Ansprüche 1 bis 12,
**dadurch gekennzeichnet,**
daß der relativ gedrosselte Weg (15,15') im wesentlichen nur im Vergleich zu den Pulsationen langsame Druckänderungen in der gas- bzw. dampfführenden Kammer (14) zuläßt.

14. Pulsationsdämpfer nach einem der Ansprüche 2 bis 13,
**dadurch gekennzeichnet,**
daß die dem Hydrauliksystem (4) zugewandte Seite der die Verschiebung von Hydraulikmedium begrenzenden Membran (8) als vom Hydraulikmedium durchströmte Kammer mit separatem Eingang (9) und Ausgang (10) ausgebildet ist, wobei Eingang (9) und Ausgang (10) vorzugsweise senkrecht zur Membranebene durchströmt werden und so angeordnet sind, daß sich die Strömungsrichtung zwischen Eingang (9) und Ausgang (10) umkehrt.

15. Pulsationsdämpfer nach einem der Ansprüche 1 bis 14,
**dadurch gekennzeichnet,**
daß eine gesonderte Druckquelle für die hydraulische Druckversorgung der gas- bzw. dampfführenden Kammer (14) vorgesehen ist.

16. Pulsationsdämpfer nach einem der Ansprüche 1 bis 15,
**dadurch gekennzeichnet,**
daß das Gas- bzw. Dampfmedium einen Vorspanndruck aufweist.

17. Pulsationsdämpfer nach Anspruch 16,
**dadurch gekennzeichnet,**
daß ein im wesentlichen nur unterhalb des Vorspanndruckes dämpfungswirksamer weiterer Pulsationsdämpfer (27,28) vorgesehen ist, welcher nur geringe Hydraulikmengen aufzunehmen vermag.

18. Pulsationsdämpfer nach Anspruch 17,
**dadurch gekennzeichnet,**
daß der weitere Pulsationsdämpfer eine begrenzt bewegliche Membran (28) aufweist, deren eine Seite vom hydraulischen Medium des Hydrauliksystems beaufschlagt wird und auf deren anderer Seite Atmosphärendruck oder ein geringer pneumatischer Druck wirksam ist.

## Claims

1. A passive adaptive hydropneumatic pulsation damper suitable for hydraulic systems of changing operating pressure and subject to pulsation, in particular hydraulic systems with pulsatingly functioning pumps, with a gaseous or vaporous medium which is subject to the pulsations of the hydraulic medium and which is enclosed in a vapour or gas-carrying chamber coupled to the hydraulic system and which forms a flexible-volume buffer which can be adapted to the hydraulic pressure, characterised in that the buffer (12, 12') formed by the gaseous or vaporous medium is subject to the pressure of the hydraulic system (4) via a relatively unthrottled path (7, 8, 11) which only permits displacement of a small quantity of hydraulic medium, and also via a throttled path (15, 15') which allows the displacement of large quantities of the hydraulic medium.

2. A pulsation damper according to claim 1, characterised in that a diaphragm (8) is disposed in the relatively unthrottled path (7, 8 11) to limit the quantity of hydraulic medium which can be displaced in unthrottled manner, in the fashion of a shut-off between abutment surfaces limiting the mobility of the diaphragm (8).

3. A pulsation damper according to claim 2, characterised in that one side of the diaphragm (8) is subject to the gaseous or vaporous medium.

4. A pulsation damper according to claim 2, characterised in that the diaphragm (8) is subject to the hydraulic medium on both its sides and separates from each other two hydraulic zones (14, 14') which communicate via the throttled path, one hydraulic zone being disposed in and communicating in relatively throttle-free fashion with the gas or vapour-containing chamber (14) while the other hydraulic zone is disposed in and communicates in relatively throttle-free fashion with the hydraulic system (4).

5. A pulsation damper according to claim 4, characterised in that the throttled path is constructed as a throttling orifice (15') in the diaphragm (8).

6. A pulsating damper according to one of claims 1 to 5, characterized in that a non-return valve (24) is disposed in parallel with the throttled path and opens in the direction of the hydraulic system (4).

7. A pulsation damper according to one of claims 2 to 6, characterized in that the diaphragm (8) is of plate-like construction and is disposed in the equator plane of a substantially lenticular diaphragm working chamber (7) which forms an upper abutment face on one side of the diaphragm and a lower abutment face on the other side of and for the diaphragm (8).

8. A pulsation damper according to one of claims 1 to 7, characterised in that the gas or vapour-containing chamber (14) is sub-divided by a separating member (13) which isolates the enclosed gaseous or vaporous medium in respect of the hydraulic medium with a considerable range of diaphragm travel and low-resistance mobility into a hydraulic zone connected to the hydraulic system (4) via at least the throttled hydraulic path (15, 15'), and a gas or vapour zone (12, 12').

9. A pulsation damper according to claim 8, characterised in that the separating member (13) is constructed as a bellows.

10. A pulsation damper according to claim 8, characterised in that the separating member (13) is constructed as a diaphragm.

11. A pulsation damper according to claim 8, characterised in that the separating member (13) is constructed as a sac.

12. A pulsating damper according to claim 8, characterised in that the separating member (13) is constructed as a piston.

13. A pulsation damper according to one of claims 1 to 12, characterised in that the throttled path (15, 15') only permits, in comparison with the pulsations, substantially slow variations in pressure in the gas or vapour-containing chamber (14).

14. A pulsation damper according to one of claims 2 to 13, characterised in that the side of the diaphragm (8) for limiting the displacement of hydraulic medium and which faces the hydraulic system (4) is constructed as a chamber through which hydraulic medium flows and which has a separate inlet (9) and outlet (10), whereby the inlet (9) and outlet (10) provide for passage preferably at right-angles to the plane of the diaphragm and are so disposed that the direction of flow is reversed between inlet (9) and outlet (10).

15. A pulsation damper according to one of claims 1 to 14, characterised in that a separate pressure source is prodded for the supply of hydraulic pressure to the gas or vapour-containing chamber (1).

16. A pulsation damper according to one of claims 1 to 15, characterised in that the gaseous or vaporous medium is at a pressurising pressure.

17. A pulsation damper according to claim 16, characterised in that a further pulsation damper (27, 28) is provided which exercises a damping effect essentially only at a pressure which is below the pressurising pressure and which can only accommodate minor quantities of hydraulic medium.

18. A pulsation damper according to claim 17, characterised in that the further pulsation damper comprises a diaphragm (28) adapted for limited movement and of which one side is subject to the action of the hydraulic medium in the hydraulic system while the other side is subject only to atmospheric pressure or a minimal pneumatic pressure.

## Revendications

1. Amortisseur hydropneumatique adaptatif passif de pulsations, convenant pour des systèmes hydrauliques affectés de pulsations et travaillant avec une pression de service variable, notamment des systèmes hydrauliques comportant une pompe travaillant de façon pulsatoire, avec un milieu sous forme de gaz ou de vapeur soumis aux pulsations du fluide hydraulique et qui est renfermé dans une chambre accouplée au système hydraulique et véhiculant la vapeur ou le gaz, et forme un coussin présentant une élasticité de volume, adaptable à la pression hydraulique, caractérisé en ce que le coussin formé par le fluide sous forme de gaz ou de vapeur est chargé par la pression du système hydraulique par l'intermédiaire d'un trajet relativement peu étranglé, qui autorise uniquement le déplacement d'une faible quantité de fluide hydraulique, ainsi que par l'intermédiaire d'un trajet étranglé, qui autorise le déplacement de grandes quantités du fluide hydraulique.

2. Amortisseur de pulsations selon la revendication 1, caractérisé en ce que dans le trajet relativement peu étranglé (7,8,11) est disposée une membrane (8) qui limite la quantité du fluide hydraulique déplaçable d'une manière non étranglée et est agencée à la manière d'un système de blocage entre des surfaces de butée limitant la mobilité de la membrane (8).

3. Amortisseur de pulsations selon la revendication 2, caractérisé en ce que la membrane (8) est chargée, sur une face, par un fluide à l'état de gaz ou de vapeur.

4. Amortisseur de pulsations selon la revendication 2, caractérisé en ce que la membrane (8) est chargée sur ses deux faces par un fluide hydraulique et sépare l'une de l'autre deux zones hydrauliques (14,14') communiquant par l'intermédiaire du trajet étranglé, une zone hydraulique étant disposée dans la chambre (14) véhiculant le gaz ou la vapeur ou bien communiquant avec cette chambre d'une manière relativement non étranglée, et l'autre zone hydraulique étant disposée dans le système hydraulique (4) ou communiquant avec ce dernier d'une manière relativement peu étranglé.

5. Amortisseur de pulsations selon la revendication 4, caractérisé en ce que le trajet étranglé est agencé sous la forme d'une ouverture d'étranglement (15') située dans la membrane (8).

6. Amortisseur de pulsations selon l'une des revendications 1 à 5, caractérisé en ce qu'en parallèle avec le trajet étranglé est disposée une soupape antiretour (24), qui s'ouvre en direction du système hydraulique (4).

7. Amortisseur de pulsations selon l'une des revendications 2 à 6, caractérisé en ce que la membrane (8) est agencée sous la forme d'un disque et est disposée dans le plan équatorial d'un espace de travail (7) de la membrane, essentiellement en forme de lentille et qui forme, d'un côté de la membrane (8), une surface de butée supérieure et, de l'autre côté de la membrane (8), une surface de butée inférieure pour la membrane (8).

8. Amortisseur de pulsations selon l'une des revendications 1 à 7, caractérisé en ce que la chambre (14) véhiculant le gaz ou la vapeur est subdivisée par un organe de séparation (13), qui sépare le fluide renfermé en forme de gaz ou de vapeur vis-à-vis du fluide hydraulique et possède une course de soulèvement importante et une mobilité avec une faible résistance dans une zone hydraulique, reliée au système hydraulique (4) au moins par l'intermédiaire du trajet hydraulique étranglé (15,15'), ainsi que dans une zone de gaz ou de vapeur (12,12').

9. Amortisseur de pulsations selon la revendication 8, caractérisé en ce que l'élément de séparation (13) est agencé sous la forme d'un soufflet.

10. Amortisseur de pulsations selon la revendication 8, caractérisé en ce que l'organe de séparation (13) est agencé sous la forme d'une membrane.

11. Amortisseur de pulsations selon la revendication 8, caractérisé en ce que l'organe de séparation (13) est agencé sous la forme d'une vessie.

12. Amortisseur de pulsations selon la revendication 8, caractérisé en ce que l'organe de séparation (13) est agencé sous la forme d'un piston.

13. Amortisseur de pulsations selon l'une des revendications 1 à 12, caractérisé en ce que le trajet relativement étranglé (15,15') autorise essentiellement seulement des variations de pression, lentes par rapport aux pulsations, dans la chambre (14) véhiculant le gaz ou la vapeur.

14. Amortisseur de pulsations selon l'une des revendications 2 à 13, caractérisé en ce que la face, tournée vers le système hydraulique (4), de la membrane (8), qui limite le déplacement du fluide hydraulique, est agencée sous la forme d'une chambre traversée par le fluide hydraulique comportant une entrée (9) et une sortie (10) séparées, l'entrée (9) et la sortie (10) étant traversées de préférence perpendiculairement au plan de la membrane et étant disposées de telle sorte que la direction d'écoulement s'inverse entre l'entrée (9) et la sortie (10).

15. Amortisseur de pulsations selon l'une des revendications 1 à 14, caractérisé en ce qu'il est prévu une source de pression séparée pour l'alimentation en pression hydraulique de la chambre (4) véhiculant le gaz ou la vapeur.

16. Amortisseur de pulsations selon l'une des revendications 1 à 15, caractérisé en ce que le milieu formé par le gaz ou la vapeur possède une pression de précontrainte.

17. Amortisseur de pulsations selon la revendication 16, caractérisé en ce qu'il est prévu un autre amortisseur de pulsations (27,28), qui a un effet d'amortissement essentiellement uniquement au-dessous de la pression de précontrainte et qui peut recevoir seulement de faibles quantités hydrauliques.

18. Amortisseur de pulsations selon la revendication 17, caractérisé en ce que l'autre amortisseur de pulsations possède une membrane (28) à déplacement limité, dont une face est chargée par le fluide hydraulique du système hydraulique et dont l'autre face est soumise à la pression atmosphérique ou à une faible pression pneumatique.
